(19) Europäisches Patentamt
European Patent Office
Office européen des brevets

(11) EP 3 390 466 B1

(12) **FASCICULE DE BREVET EUROPEEN**

(45) Date de publication et mention de la délivrance du brevet:
**02.06.2021 Bulletin 2021/22**

(21) Numéro de dépôt: **16829260.5**

(22) Date de dépôt: **16.12.2016**

(51) Int Cl.:
***C08F 210/02*** *(2006.01)* ***C08F 4/54*** *(2006.01)*
***C08F 236/06*** *(2006.01)*

(86) Numéro de dépôt international:
**PCT/FR2016/053538**

(87) Numéro de publication internationale:
**WO 2017/103544 (22.06.2017 Gazette 2017/25)**

(54) **COPOLYMERE D'ETHYLENE ET DE BUTADIENE DE MICROSTRUCTURE HOMOGENE**

ETHYLEN- UND BUTADIEN-COPOLYMER MIT EINER HOMOGENEN MIKROSTRUKTUR

ETHYLENE AND BUTADIENE COPOLYMER HAVING A HOMOGENEOUS MICROSTRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2015 FR 1562575**

(43) Date de publication de la demande:
**24.10.2018 Bulletin 2018/43**

(73) Titulaire: **Compagnie Générale des Etablissements Michelin**
**63000 Clermont-Ferrand (FR)**

(72) Inventeurs:
- **PACHECO, Nuno**
  **63040 Clermont-Ferrand Cedex 9 (FR)**
- **THUILLIEZ, Julien**
  **63040 Clermont-Ferrand Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 599 808 WO-A1-2004/035639**

- **MARIO BRUZZONE ET AL: "Ethylene-butadiene copolymers", MAKROMOLEKULARE CHEMIE, MACROMOLECULAR CHEMISTRY AND PHYSICS., vol. 179, no. 9, 1 septembre 1978 (1978-09-01), pages 2173-2185, XP055294677, CH ISSN: 0025-116X, DOI: 10.1002/macp.1978.021790906**
- **THUILLIEZ J ET AL: "ansa-Bis(fluorenyl)neodymium Catalysts for Cyclopolymerization of Ethylne with Butadiene", MACROMOLECULES, AMERICAN CHEMICAL SOCIETY, US, vol. 42, no. 11, 9 juin 2009 (2009-06-09), pages 3774-3779, XP001523727, ISSN: 0024-9297, DOI: 10.1021/MA9003852**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 390 466 B1

## Description

La présente invention concerne les copolymères d'éthylène et de butadiène pour lesquels la microstructure est contrôlée et homogène tout le long de la chaîne du copolymère. La présente invention concerne également un procédé de préparation d'un tel copolymère ainsi que les utilisations de ce copolymère, en particulier dans des compositions de caoutchouc pour pneumatiques.

Les copolymères à base d'éthylène et de diène conjugué présentent des propriétés intéressantes pour une application pneumatique selon les caractéristiques des matériaux visés, tel que décrit par exemple dans les demandes de brevet WO2014082919 A1 ou WO 2014114607 A1

Un autre avantage de ces copolymères est l'utilisation d'éthylène qui est un monomère courant et disponible sur le marché, et accessible par voie fossile ou biologique

Un autre avantage de ces copolymères est la présence d'unités éthylène le long du squelette de polymères, unités largement moins sensibles aux mécanismes de dégradation oxydantes ou thermo-oxydantes, ce qui confère aux matériaux une meilleure stabilité et durée de vie.

La synthèse des copolymères à base d'éthylène et butadiène est décrite par exemple dans les brevets EP1092731A1, US 2005/0239639A1, EP 0 526 955, WO 2005/028526A1 et US2009270578A1 THUILLIEZ J ET AL: "ansa-Bis(fluorenyl)neodymium Catalysts for Cyclopolymerization of Ethylne with Butadiene",MACROMOLECULES, ACS, vol. 42, no. 11, divulgue un procédé de polymérisation mettant en œuvre des catalyseurs à base de néodyme. Ces catalyseurs sont employés avec succès dans la cyclopolymérisation de l'éthylène avec le butadiène (p3775, colonne 1, 1er paragraphe). D3 ne permet pas de contrôler le taux d'incorporation d'éthylène et de butadiène dans le copolymère et ainsi de contrôler la microstructure du copolymère et de s'assurer que la concentration molaire en chacune des unités est constante tout le long de la chaîne du copolymère.

Les procédés industriels de polymérisation en solution sont souvent constitués de trois grandes étapes :

1) Préparation des mélanges réactionnels ;
2) Polymérisation des monomères en solution en contact avec un système catalytique ;
3) Récupération de l'élastomère et recyclage des solvants, des réactifs n'ayant pas réagi et des sous-produits de réaction.

L'étape 1) de préparation consiste à préparer les solutions de monomères et de système catalytique pour leur introduction postérieure dans le ou les réacteurs de l'étape de polymérisation.

L'étape 2) de polymérisation consiste à mélanger les différentes solutions de monomères et de système catalytique pour mener la réaction de polymérisation des monomères.

L'étape 3) de récupération consiste à séparer le polymère des solvants et des produits chimiques n'ayant pas réagi (comme les monomères). Les solvants et les produits chimiques n'ayant pas réagi sont préférentiellement recyclés à l'étape de préparation. Cependant, dans certaines conditions le recyclage peut ne pas être envisageable.

Dans les procédés de polymérisation connus à ce jour, la microstructure du copolymère obtenu est subie ou au mieux la microstructure moyenne est contrôlée. Cependant, cette microstructure n'est pas homogène tout le long de la chaîne polymère et dépend notamment du mode de conduite de la polymérisation et des rapports de réactivité du système catalytique vis-à-vis de chacun des monomères. On observe alors un gradient de composition dû notamment au fait que les monomères éthylène et butadiène présentent des vitesses d'insertion différentes dans la chaîne polymère en croissance pour les systèmes catalytiques existants.

L'invention traite particulièrement des copolymères à base d'éthylène et butadiène ne comprenant pas d'unités *trans*-1,2-cyclohexane.

De manière surprenante, il a été découvert qu'il était possible de contrôler le taux d'incorporation de l'éthylène et du butadiène et l'homogénéité des différentes unités tout le long de la chaîne. Les différentes unités pouvant être retrouvées dans ces copolymères sont des unités éthylène et des unités butadiène.

## BREVE DESCRIPTION DE L'INVENTION

L'invention a pour objet de nouveaux copolymères d'éthylène et de butadiène. Chaque copolymère d'éthylène et de butadiène comprend, répartis statistiquement, des unités éthylène, des unités butadiène, la fraction molaire d'unités éthylène dans ledit copolymère étant égale ou supérieure à 50%, par rapport au nombre de moles total d'unités éthylène et butadiène, caractérisé en ce que la microstructure du copolymère est homogène et ainsi la concentration molaire en chacune des unités est constante tout le long de la chaîne du copolymère.

La fraction molaire d'unités éthylène varie avantageusement de 50% en moles à 95% en moles, par rapport au nombre de moles total d'unités éthylène et butadiène.

La fraction molaire d'unités éthylène varie avantageusement de 70% en moles à 88% en moles, par rapport

au nombre de moles total d'unités éthylène et butadiène.

L'invention a également pour objet un procédé semi-continu de préparation d'un copolymère d'éthylène et de butadiène selon l'invention, comprenant la polymérisation en solution, dans un solvant hydrocarboné, à une température comprise entre 0°C et 200°C, d'éthylène et de butadiène en présence d'un système catalytique , dans un réacteur agité, caractérisé en ce que la polymérisation est conduite à température constante et à pression éthylène et pression butadiène constantes, en ce que de l'éthylène et du butadiène sont injectés de manière continue dans le réacteur et ce que dans le milieu réactionnel, à chaque instant de la polymérisation, les concentrations en éthylène et en butadiène sont constantes.

Dans une variante, la composition du milieu réactionnel est analysée en continu et le débit d'injection en éthylène et butadiène est ajusté pour maintenir dans le milieu réactionnel des concentrations en éthylène et en butadiène constantes.

La température est maintenue constante.

Dans une autre variante, le débit d'injection en éthylène et butadiène est ajusté pour maintenir une pression éthylène et une pression butadiène constantes dans le réacteur.

En particulier, l'éthylène et le butadiène sont injectés selon un rapport de débit pré-déterminé.

En particulier, on injecte une composition comprenant l'éthylène et le butadiène à concentrations en éthylène et en butadiène constantes.

Le système catalytique comprend avantageusement au moins deux constituants, d'une part, un métallocène répondant à la formule (I) :

$$[P(Cp^1)(Cp^2)Met] \qquad (I)$$

- avec :

  Met étant un groupe comportant :

  - au moins un atome de scandium, yttrium ou un atome de lanthanide, dont le numéro atomique va de 57 à 71,
  - au moins un ligand monovalent, appartenant au groupe des halogènes, tel que le chlore, l'iode, le brome, le fluor, au groupe des amidures, des alkyles ou des borohydrures
  - éventuellement d'autres constituants tels que des molécules complexantes appartenant au groupe des éthers ou des amines,

  P étant un groupe, à base d'au moins un atome de silicium ou de carbone, pontant les deux groupes $Cp^1$ et $Cp^2$
  $Cp^1$ et $Cp^2$, sont identiques entre eux ou différents l'un de l'autre, et étant choisis dans le groupe constitués par les groupes cyclopentadiényles, indényles, fluorényles, ces groupes pouvant être substitués ou non
  Chacun des $Cp^1$ et $Cp^2$ étant lié à un atome de lanthanide, scandium ou yttrium
  Le cas où les $Cp^1$ et $Cp^2$ sont tous deux des fluorényles identiques est exclu de l'invention
  d'autre part d'un ou plusieurs composés organométalliques à titre de co-catalyseur ou d'agent d'alkylation.

L'invention a également pour objet un copolymère d'éthylène et de butadiène obtenu par le procédé selon l'invention, caractérisé en ce que la microstructure du copolymère est homogène.

Dans une variante, le copolymère d'éthylène et de butadiène selon l'invention est un élastomère. Dans une autre variante, le copolymère d'éthylène et de butadiène selon l'invention est un polymère semi-cristallin.

L'invention a également pour objet une composition, en particulier une composition , comprenant un copolymère d'éthylène et de butadiène selon l'invention. Dans une variante, cette composition est une composition de caoutchouc.

L'invention a également pour objet un pneumatique dont un des éléments constitutifs comprend une composition selon l'invention.

Dans la présente description, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Par « unité éthylène », on désigne, au sens de la présente invention, les unités de formule $-(CH_2-CH_2)-$.

Par « unité butadiène », on désigne, au sens de la présente invention, les unités 1,4 de formule $-(CH_2-CH=CH-CH_2)-$ et les unités 1,2 de formule $-(CH_2-C(CH=CH_2))-$. Les unités 1,4 de formule $-(CH_2-CH=CH-CH_2)-$ peuvent être de configuration *trans* ou *cis.*

Par « unité *trans* 1,2-cyclohexane », on désigne, au sens de la présente invention, les unités de formule :

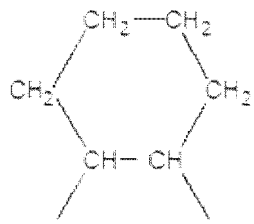

Dans l'expression « significativement exempte de gradient de composition », par « significativement », on entend, au sens de la présente invention, une variation inférieure à 2% molaire.
Dans l'expression « la concentration est identique ou quasi-identique à », par « quasi-identique », on entend, au sens de la présente invention, une variation inférieure à 2% molaire.
Le « milieu réactionnel » désigne, au sens de la présente invention, la solution au sein du réacteur.
Par l'expression « température constante » on entend, au sens de la présente invention, une variation de température inférieure à 5°C au sein du réacteur.
Par l'expression « pression éthylène », on désigne, au sens de la présente invention, la pression partielle d'éthylène au sein du réacteur.
Par l'expression « pression butadiène », on désigne, au sens de la présente invention, la pression partielle de butadiène au sein du réacteur.
Par l'expression « pression monomères », on désigne, au sens de la présente invention, la somme des pressions « pression éthylène » et « pression butadiène », c'est-à-dire la somme des pressions partielles des monomères à polymériser au sein du réacteur.
L'expression « pression » sans autre indication spécifique indique la pression totale au sein du réacteur et est la résultante des « pressions éthylène », « pression butadiène » et la contribution des autres constituants du milieu réactionnel, tel que le ou les solvants, ou encore le gaz inerte selon les cas (par exemple : azote).
Par l'expression pression « constante », on entend, au sens de la présente invention, une variation de pression inférieure à 0,5 bars.
Par l'expression «concentrations en éthylène et en butadiène constantes», on entend, au sens de la présente invention, des variations inférieures à 0.1 mol/L.

## BREVE DESCRIPTION DES DESSINS

**Figure 1** : schéma de principe pour une polymérisation selon le premier mode de fonctionnement de l'invention
**Figure 2** : schéma de principe pour une polymérisation selon le deuxième mode de fonctionnement, première variante, de l'invention
**Figure 3** : schéma de principe pour une polymérisation selon le deuxième mode de fonctionnement, deuxième variante, de l'invention.

Significations des sigles utilisés dans ces figures :

CIC : Concentration Indicator Controller, régulateur indicateur de concentration
PIC : Pressure Indicator Controller, régulateur indicateur de pression
FI : Flow Indicator, débitmètre
FC : Flow Controller, régulateur de débit

## DESCRIPTION DETAILLEE DE L'INVENTION

L'invention a pour objet un copolymère d'éthylène et de butadiène comprenant, répartis statistiquement, des unités éthylène et des unités butadiène, la fraction molaire d'unités éthylène dans ledit copolymère étant égale ou supérieure à 50%, par rapport au nombre de moles total d'unités éthylène et butadiène, caractérisé en ce que la microstructure du copolymère est homogène.
Un copolymère est de microstructure homogène lorsque pour chacune de ces unités, à chaque instant de polymérisation, les concentrations dans la chaîne sont identiques ou quasi-identiques. Ainsi, pour chacune de ces unités, à un instant donné, la concentration est identique ou quasi-identique à sa concentration à l'instant juste avant et après, et ainsi à tout instant de la polymérisation.

En particulier, dans le copolymère d'éthylène et de butadiène la concentration molaire en chacune de ces unités est constante tout le long de la chaîne du copolymère. Ainsi, pour un nombre représentatif d'unités successives définissant un segment, présent en début, milieu, fin ou en tout autre endroit de la chaîne du copolymère, la concentration en unités éthylène et unités butadiène est identique ou quasi-identique dans chaque segment. Un enchaînement de 10 unités peut-être un nombre représentatif.

Avantageusement, la concentration en unités éthylène et en unités butadiène est identique ou quasi-identique tout le long de la chaîne du copolymère. La concentration en chacune des unités va pouvoir être déterminée à l'avance en fonction de la nature du système catalytique choisi et des conditions opératoires (concentrations et pression monomères notamment).

Contrairement aux copolymères synthétisés jusque-là, on n'observe pas une surconcentration en une de ces unités, en particulier en début ou en fin de chaîne. Autrement dit, la microstructure est exempte ou significativement exempte de gradient de composition.

Le contrôle de la microstructure du copolymère permet d'accéder à des copolymères de microstructure identique à tout instant de la polymérisation, ce qui permet par exemple d'accéder à des échantillons de même microstructure, à différents instants de la polymérisation. Dans le copolymère selon l'invention, la fraction molaire d'unités éthylène, par rapport au nombre de moles total d'unités éthylène et butadiène, est supérieure à 50% molaire. Il varie avantageusement de 50% en moles à 99% en moles, plus avantageusement de 50% en moles à 90% en moles, encore plus avantageusement de 70% en moles à 88% en moles, ou encore plus avantageusement de 65% en moles à 80% en moles, par rapport au nombre de moles total d'unités éthylène et butadiène.

Selon un exemple particulièrement avantageux de réalisation de l'invention, dans le copolymère éthylène/butadiène la fraction molaire d'unités butadiène, par rapport au nombre de moles total d'unités éthylène et butadiène, dans ledit copolymère est inférieure à 50% molaire. La fraction molaire d'unités butadiène varie avantageusement de 1% à 35% molaire, par rapport au nombre de moles total d'unités éthylène et butadiène.

Les unités butadiène désignent les unités 1,4 de formule $-(CH_2-CH=CH-CH_2)-$ , de configuration *trans* ou *cis*, et les unités 1,2 de formule $-(CH_2-C(CH=CH_2))-$ . La concentration en chacune de ces unités va également être constante tout le long de la chaîne du copolymère. Elle va également pouvoir être déterminée à l'avance en fonction de la nature du système catalytique choisi et des conditions opératoires (concentrations et pression monomères notamment).

Avantageusement, les copolymères d'éthylène et de butadiène selon l'invention présentent une masse Mn allant de 1 000 g/mol à 1 500 000 g/mol, plus préférentiellement allant de 60 000 g/mol à 250 000 g/mol.

Selon une autre caractéristique de l'invention, les copolymères selon l'invention présentent un indice de polymolécularité qui est inférieur à 2,5. De préférence, l'indice Ip desdits copolymères est inférieur ou égal à 2 et, à titre encore plus préférentiel, cet indice Ip est inférieur ou égal à 1,9. A l'instar des masses moléculaires Mn, les indices de polymolécularité Ip ont été déterminés dans la présente demande par chromatographie d'exclusion stérique (technique SEC décrite avant les exemples).

Les copolymères selon l'invention présentent de préférence une température de transition vitreuse Tg qui est inférieure à 25°C. Plus précisément, ces copolymères peuvent par exemple présenter une température Tg comprise entre -45 °C et -20 °C.

Les copolymères selon l'invention sont avantageusement des élastomères.

L'invention a également pour objet un procédé semi-continu de préparation d'un copolymère d'éthylène et de butadiène selon l'invention, comprenant la polymérisation en solution, dans un solvant hydrocarboné, à une température comprise entre 0°C et 200°C, avantageusement comprise entre 0°C et 120°C, d'éthylène et de butadiène en présence d'un système catalytique adapté dans un réacteur, caractérisé en ce que la polymérisation est conduite à température constante, à pression éthylène et pression butadiène constantes, en ce que de l'éthylène et du butadiène sont injectés de manière continue et contrôlée dans le réacteur et ce que dans le milieu réactionnel, à chaque instant de la polymérisation, les concentrations en éthylène et en butadiène sont conservées constantes.

Le réacteur est muni de moyens d'agitation.

Le procédé selon l'invention est ainsi un procédé contrôlé, pour lequel on maîtrise les quantités d'éthylène et de butadiène introduites, qui sont définies notamment en fonction du système catalytique choisi et de la microstructure recherchée. Ce contrôle permet à la fois de définir la microstructure du polymère synthétisé, mais aussi de définir et de maintenir la pression éthylène et la pression butadiène constantes.

L'étape de polymérisation est avantageusement réalisée selon un procédé semi-continu en solution en présence d'un système catalytique adapté avec une injection continue des co-monomères, éthylène et butadiène, dans un réacteur agité pour obtenir un copolymère de composition homogène et statistique tout le long de la chaîne.

Les systèmes catalytiques permettant la synthèse de copolymères selon l'invention sont choisis par l'homme de l'art, de telle sorte à ne pas permettre la formation d'unités *trans* 1,2-cyclohexane au sein de la chaîne polymère. Le système catalytique comprend avantageusement au moins deux constituants, d'une part un métallocène répondant à la formule (I) :

[P(Cp$^1$)(Cp$^2$)Met] (I)

- avec :

Met étant un groupe comportant :

o au moins un atome de scandium, yttrium ou un atome de lanthanide, dont le numéro atomique va de 57 à 71,
o au moins un ligand monovalent, appartenant au groupe des halogènes, tel que le chlore, l'iode, le brome, le fluor, au groupe des amidures, des alkyles ou des borohydrures
o éventuellement d'autres constituants tels que des, molécules complexantes, appartenant au groupe des éthers ou des amines,

P étant un groupe, à base d'au moins un atome de silicium ou de carbone, pontant les deux groupes Cp$^1$ et Cp$^2$
Cp$^1$ et Cp$^2$, sont identiques entre eux ou différents l'un de l'autre, et étant choisis dans le groupe constitué par les groupes cyclopentadiényles, indényles, fluorényles, ces groupes pouvant être substitués ou non
Chacun des Cp$^1$ et Cp$^2$ étant lié à un atome de lanthanide, scandium ou yttrium
Le cas où les Cp$^1$ et Cp$^2$ sont tous deux des fluorényles identiques est exclu de l'invention
o
d'autre part un ou plusieurs composés organométalliques à titre de co-catalyseur ou d'agent d'alkylation, le composé organométallique étant un alkyl magnésium, un alkyl lithium, un alkyl aluminium ou un réactif de Grignard.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

Dans la présente demande, dans le cas du groupe cyclopentadiényle, la position 2 (ou 5) désigne la position de l'atome de carbone qui est adjacent à l'atome de carbone auquel est attaché le groupe pontant P, comme cela est représenté dans le schéma ci-après.

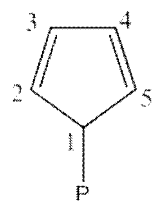

A titre de groupe cyclopentadiényle substitué en position 2 & 5, on peut citer plus particulièrement le groupe tétraméthylcyclopentadiényle.

Dans le cas du groupe indényle, la position 2 désigne la position de l'atome de carbone qui est adjacent à l'atome de carbone auquel est attaché le groupe pontant P, comme cela est représenté dans le schéma ci-après.

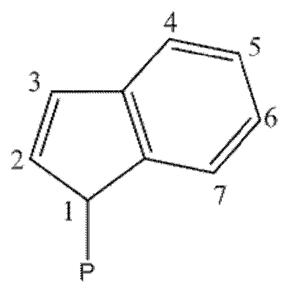

A titre de groupes indényles substitués en position 2, on peut citer plus particulièrement le 2-méthylindényle, le 2-phénylindényle.

A titre de groupes fluorényles substitués, on peut citer plus particulièrement les groupes 2,7-ditertiobutyl-fluorényle et 3,6-ditertiobutyl-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le groupe pontant P.

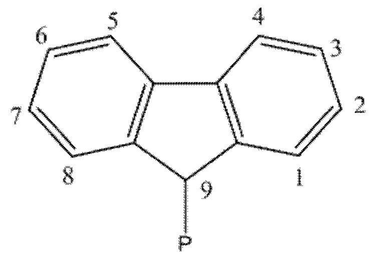

Avantageusement, le métallocène est un métallocène de lanthanide. A titre préférentiel le métallocène de lanthanide est choisi parmi les composés $[Me_2Si(3-(CH_3)_3Si-C_5H_3)_2NdCl]$, $[Me_2Si(3-(CH_3)_3Si-C_5H_3)_2Nd(BH_4)(THF)_2]$, $[Me_2Si(3-{}^tBu-C_5H_3)_2NdCl]$, $[Me_2Si(3-{}^tBu-C_5H_3)_2Nd(BH_4)(THF)_2]$, $[Me_2Si(C_5H_4)_2Nd(BH_4)]$, $[Me_2Si(C_5Me_4)_2Nd(BH_4)]$, $[Me_2Si(Cp)(Flu)Nd(Cl)]$ $[Me_2Si(Cp)(Flu)Nd(BH_4)(THF)]$, $[Me_2Si(Cp)(2,7-({}^tBu)_2-Flu)Nd(BH_4)(THF)]$ et $[Me_2Si(Cp)(3,6-({}^tBu)_2-Flu)Nd(BH_4)(THF)]$ et le co-catalyseur est choisi parmi les dialkylmagnésiens tels que l'éthylbutylmagnésium ou le butyloctylmagnésium.

Le symbole « Flu » représente le groupe fluorényle en $C_{13}H_8$ et le symbole « MeInd » représente un groupe indényle substitué en position 2 par un méthyle.De tels systèmes ont par exemple été décrits dans les demandes EP1092731A1, US 2005/0239639A1, EP 0 526 955, WO 2005/028526A1 et US2009270578A1

Optionnellement le système catalytique peut comprendre d'autres constituants, choisis parmi les éthers, les solvants aliphatiques, ou d'autres composés connus de l'homme de l'art et compatibles avec de tels systèmes catalytiques.

La réaction de polymérisation de l'éthylène et butadiène en solution est mise en œuvre dans un ou plusieurs réacteurs en parallèle. Quand plusieurs réacteurs selon l'invention sont en parallèle, la gestion du cadencement peut être ajustée selon les besoins de fabrication et en cohérence avec les étapes préalable de préparation des réactifs et subséquente de récupération du polymère.

Chaque réacteur doit assurer un niveau de mélange optimal entre la phase gaz et la phase liquide. A titre d'exemple, nous pouvons citer les modules d'agitation interne type arbre creux ou/et les modules de recirculation de la phase gaz via une boucle extérieure avec injection dans la phase liquide.

Il est préférable d'utiliser des réacteurs permettant de tenir et contrôler au moins 15 bars de pression, préférentiellement au moins 200 bars de pression. En effet, la pression éthylène et la pression butadiène doivent être constantes, tout le long de la polymérisation afin de garantir une microstructure homogène tout le long de la chaîne polymère, ainsi que les niveaux de productivité attendus.

Il est également préférable d'utiliser des réacteurs avec un dispositif de contrôle de température efficace. Par exemple, une double enveloppe, un condenseur interne dans la phase gaz, un échangeur de chaleur dans la phase liquide, un refroidisseur dans la boucle extérieure de recirculation de gaz.

La température de polymérisation est avantageusement comprise entre 0°C et 200°C, plus avantageusement comprise entre 0°C et 120°C. La température de polymérisation est choisie en fonction du système catalytique et du produit à obtenir. On contrôle également la température, qui a une influence sur la macrostructure et la microstructure, pour la maintenir constante tout le long de la phase de polymérisation dans la plage choisie.

La pression éthylène, constante lors de l'étape de polymérisation, peut avantageusement aller de 1 à 100 bar. La pression butadiène, constante lors de l'étape de polymérisation, peut avantageusement aller de 1 à 100 bar.

Selon l'invention, un système de gestion d'injection des monomères est couplé au réacteur pour maintenir constantes la pression éthylène et la pression butadiène et ainsi garantir un polymère statistique et exempt de gradient de composition tout le long de la chaîne.

Dans un premier mode de fonctionnement, ce système de maîtrise de l'injection des monomères peut être constitué d'un moyen de mesure de la concentration d'éthylène dans le milieu réactionnel et d'un moyen de mesure de la concentration de butadiène dans le milieu réactionnel. Par conséquent, les débits d'injection de chacun des deux monomères sont ajustés en fonction de la mesure de composition du milieu réactionnel. Ces ajustements se font pour assurer une concentration constante à la consigne en éthylène et en butadiène dans le milieu réactionnel.

Ainsi, dans ce premier mode de fonctionnement, la composition du milieu réactionnel est analysée en continu et les débits d'injection en éthylène et en butadiène sont ajustés pour maintenir dans le milieu réactionnel des concentrations en éthylène et en butadiène constantes.

Dans ce mode de fonctionnement, la température est maintenue constante tout le long de la phase de polymérisation.

Dans ce mode de fonctionnement, le butadiène est avantageusement injecté sous forme liquide.

Dans ce mode de fonctionnement, l'éthylène est avantageusement injecté sous forme gazeuse.

A titre d'exemple et non limitatif, le moyen de mesure peut être effectué par des méthodes type absorbance dans la gamme d'infrarouge, des méthodes type absorbance dans la gamme de l'ultraviolet/visible, ou par chromatographie gazeuse.

Un exemple de réacteur selon ce premier mode de fonctionnement est représenté sur la figure 1, les conduits d'alimentation en solvant et en système catalytique n'étant pas représentés.

1. Réacteur
2A et 2B. Vannes de régulation de débit
3. Conduit d'alimentation en éthylène
4. Conduit d'alimentation en butadiène
5. Moyens d'agitation
6. Conduit de vidange du réacteur
7. Refroidissement externe du réacteur
8. Moteur d'entraînement des moyens d'agitation
9A et 9B. Contrôleurs automatiques de la concentration d'éthylène et du butadiène dans le milieu réactionnel

Le réacteur 1 comprend des moyens de mesure (non représentés) de la concentration de l'éthylène et celle du butadiène dans le milieu réactionnel, reliés à un contrôleur automatique de la concentration d'éthylène et de butadiène, respectivement 9A et 9B, asservissant les débits d'injection de l'éthylène alimenté par un conduit 3 et du butadiène alimenté par un conduit 4. Le réacteur comprend des moyens d'agitation 5, ici plusieurs pâles. La température au sein du réacteur est maintenue constante tout le long de la phase de polymérisation.

Dans un deuxième mode de fonctionnement, le débit d'injection en éthylène et butadiène est continu et est ajusté pour maintenir une pression éthylène et une pression butadiène constantes dans le réacteur.

Dans ce mode de fonctionnement, la température est maintenue constante tout le long de la phase de polymérisation.

Dans ce mode de fonctionnement, la concentration en éthylène dans le milieu réactionnel est maintenue constante en gérant la pression au sein du réacteur avec un ajout en continu d'éthylène. En effet, en maintenant la pression éthylène constante au sein du réacteur et en injectant continument de l'éthylène, à un débit qui peut varier, on compense la consommation d'éthylène. Il en est de même pour le butadiène.

Dans une première variante, l'éthylène et le butadiène sont injectés selon un rapport de débit pré-déterminé. Ainsi, l'injection des monomères est contrôlée par la pression éthylène et la pression butadiène du réacteur et par un rapport de débits connu par les différents outils disponibles auprès de l'homme de l'art (expérimentation, simulation numérique), et adaptés au système catalytique mis en œuvre.

Un exemple de réacteur selon ce premier mode de fonctionnement est représenté sur la figure 2, les conduits d'alimentation en solvant et en système catalytique n'étant pas représentés.

1 Réacteur
2A et 2B Vannes de régulation de débit
3 Conduit d'alimentation en Ethylène
4 Conduit d'alimentation en Butadiène
5 Moyens d'agitation
6 Conduit de vidange du réacteur
7 Refroidissement externe du réacteur
8 Moteur d'entraînement des moyens d'agitation
9 Contrôleur automatique de la pression du réacteur
10 et 11 Moyens de mesure de débit
12 Contrôleur du ratio de débits d'alimentation d'éthylène et de butadiène

Dans ce mode de fonctionnement, le butadiène est avantageusement injecté sous forme liquide.

Dans ce mode de fonctionnement, l'éthylène est avantageusement injecté sous forme gazeuse.

Le réacteur 1 comprend un moyen de mesure de la pression (non représenté) au sein du réacteur relié à un contrôleur automatique de la pression du réacteur 9 qui asservit les débits d'injection de l'éthylène et du butadiène, respectivement alimentés par un conduit 3 et un conduit 4. Les pressions éthylène et butadiène sont maintenues constantes en maintenant constante la pression totale au sein du réacteur. Les débits d'injection de l'éthylène et du butadiène, régulés par l'ouverture des vannes respectives 2A et 2B et mesurés respectivement par des moyens de mesure de

débit 10 et 11, sont par ailleurs contrôlés par un contrôleur du ratio de débits d'alimentation d'éthylène et de butadiène 12 pour respecter le rapport de débit pré-établi. Le réacteur comprend des moyens d'agitation 5, ici plusieurs pâles. La température au sein du réacteur est maintenue constante tout le long de la phase de polymérisation.

Dans une deuxième variante, on injecte une composition comprenant l'éthylène et le butadiène à concentrations en éthylène et en butadiène constantes.

Un exemple de réacteur selon ce premier mode de fonctionnement est représenté sur la figure 3 les conduits d'alimentation en solvant et en système catalytique n'étant pas représentés.

1. Réacteur
2. Vanne de régulation de débit
3. Conduit d'alimentation en Ethylène
4. Conduit d'alimentation en Butadiène
5. Moyens d'agitation
6. Conduit de vidange
7. Refroidissement externe
8. Moteur d'entraînement du mobile d'agitation
9. Contrôleur automatique de la pression du réacteur

Le réacteur 1 comprend un moyen de mesure de la pression (non représenté) au sein du réacteur, relié à un contrôleur automatique de la pression du réacteur 9 qui asservit le débit d'injection du pré-mélange éthylène/butadiène par l'intermédiaire d'une vanne 2, l'éthylène et le butadiène étant alimentés respectivement par un conduit 3 et un conduit 4 . Les pressions éthylène et butadiène sont maintenues constantes en maintenant constant la pression totale au sein du réacteur. Le réacteur comprend des moyens d'agitation 5, ici plusieurs pâles. La température au sein du réacteur est maintenue constante tout le long de la phase de polymérisation.

Dans ce mode de fonctionnement, le mélange butadiène / éthylène est avantageusement injecté sous forme liquide ou supercritique. En effet, l'injection peut être à des pressions suffisamment élevées, en particulier de 52 à 250 bar, plus avantageusement de 60 à 100 bar, et des températures suffisamment basses, en particulier de 0 à 50°C, plus avantageusement de 5 à 25°C, pour avoir un mélange liquide dans le but d'adapter les conditions d'injection aux technologies existantes.

Le procédé de polymérisation en solution comprend de manière générale trois grandes étapes :

- Etape 1 : étape de préparation
- Etape 2 : étape de polymérisation
- Etape 3 : étape de récupération du polymère

Etape 1 :

L'objectif de l'étape 1 est de :

- Purifier les monomères (éthylène et butadiène) et le solvant si nécessaire
- Préparer la solution de système catalytique

Les techniques de purification des monomères et solvant dépendent de la nature des impuretés et de leur teneur. Nous pouvons citer à titre d'exemple, et non limitatifs, que des techniques de distillation ou d'adsorption chimique peuvent être envisagés pour la purification des monomères ou solvant.

Comme solvant nous pouvons citer quelques exemples comme les alcanes en $C_2$ à $C_{30}$, les alcanes ramifiés en $C_4$ à $C_{30}$, les alcanes cycliques en $C_5$-$C_6$, les alcanes cycliques ramifiés en $C_6$-$C_{30}$, les solvants aromatiques en $C_6$-$C_{30}$ et les mélanges de ces produits.

La préparation de la solution de système catalytique est une étape délicate puisque ce type de système catalytique ne tolère pas la présence d'air ou de produits protiques comme par exemple l'eau ou des alcools. La préparation se fait avec le solvant de polymérisation purifié et/ou recyclé du procédé.

Etape 2 :

L'étape 2 comprend la réaction de polymérisation telle que décrite précédemment.

Avant la phase de production, le réacteur ou les réacteurs doivent être nettoyés de façon à ce que le taux d'impuretés présentes dans le réacteur soit inférieur ou égal au taux d'impuretés toléré par le système catalytique.

A titre d'exemple, le réacteur peut être lavé par le solvant purifié dans l'étape 1 et le taux d'impuretés mesuré sur le

solvant de lavage.
Dans un autre mode complémentaire ou de remplacement, les impuretés du réacteur néfastes pour la polymérisation sont neutralisées par lavage par une solution d'alkyle aluminium ou d'alkylmagnésium. On dit alors que le réacteur est rendu inerte.
Le cadencement de production est engagé après la phase de nettoyage. Le cadencement qui permet d'obtenir le copolymère selon l'invention est avantageusement divisé en trois phases :

• Phase 1) chargement du réacteur

La phase 1) commence par le chargement du réacteur avec la quantité choisie de solvant ou mélange de solvants. Cette phase se fait de préférence sous atmosphère inerte, à la température de la réaction visée et avec le ou les systèmes de mélange en fonctionnement au régime souhaité.
Puis, les monomères sont introduits tout en respectant la composition souhaitée pour le milieu. L'introduction de monomères se termine quand la pression du réacteur atteint la pression souhaitée.

La phase 1 est terminée quand les solvants et les monomères sont dans le réacteur à pression, température et composition en monomères souhaités.

• Phase 2) polymérisation

La phase 2) démarre avec l'injection de la solution du système catalytique dans le réacteur, à quantité souhaitée. La phase de polymérisation se poursuit avec une alimentation continue des monomères selon un des modes décrits précédemment.
Le contrôle de la température et le maintien de la pression éthylène et de la pression butadiène constantes sont essentiels pour obtenir le produit souhaité.
Le cycle de la phase 2 se termine une fois la conversion en monomères souhaitée atteinte. Le temps de polymérisation correspondant est déterminé par les différents outils disponibles auprès de l'homme de l'art (expérimentation, simulation numérique), et adapté au système catalytique et aux conditions expérimentales mises en œuvre.

• Phase 3) déchargement et stoppage de la polymérisation

La phase 3 consiste à vidanger le réacteur de polymérisation. Au moment de la vidange du réacteur, la solution polymère est mélangée avec un agent de terminaison, ou « stoppeur », pour arrêter la réaction de polymérisation et désactiver le système catalytique. Cet agent peut être un alcool ou tout autre composé chimique conduisant à la désactivation du système catalytique. Le stoppage de la réaction peut se faire dans le réacteur ou à l'extérieur (autre réacteur, tube, ...).
Une fois terminée la phase 3), l'étape de polymérisation est terminée.

Etape 3 :

L'étape 3) consiste à :

- récupérer le polymère de la solution et le séparer de son solvant selon toute méthode connue de l'homme de l'art, de telle sorte à l'isoler et l'amener à un taux de matières volatiles inférieur à 1% en poids,
- récupérer le solvant et les monomères non convertis et les recycler en totalité ou en partie à l'étape 1) si une purification est nécessaire ou en totalité ou en partie à l'étape 2) si la purification n'est pas nécessaire.

Pour cela, nous pouvons citer de manière non limitative plusieurs techniques de récupération connues de l'homme de l'art, comme :

- La décantation, si deux phases liquides peuvent se former dans les conditions de séparation. Une des phases est riche en polymère l'autre riche en solvant et monomères qui n'ont pas réagi. Cette technique peut être possible si le mélange solvant, monomères et polymère le permet, et avantageuse d'un point de vue énergétique. Souvent, cette technique est présente après l'étape 2) ;
- Le flash, qui consiste à séparer par dévolatilisation le solvant et les monomères non convertis du polymère par effet thermique ou par effet d'une réduction de la pression ou les deux. Souvent, cette technique est présente après l'étape 2) ou la décantation;
- Le stripping, qui consiste à séparer le solvant et les monomères non convertis du polymère par la présence d'un tiers corps inerte comme l'azote, la vapeur. Cette étape peut être couplée avec un effet thermique pour améliorer

la récupération du polymère. Souvent, cette technique est présente après la dévolatilisation par flash ;

- l'essorage, qui consiste à presser des particules d'élastomère pour extraire les constituants liquides contenus à l'intérieur des particules d'élastomère. Souvent, cette technique est présente après une étape de stripping ;
- L'extrusion/flash, qui consiste à comprimer le polymère à des pressions élevées et à des températures suffisamment élevées pour par la suite effectuer une détente par un flash. Cela permet de dévolatiliser quasiment la totalité des résidus de solvant et de monomères non convertis. Souvent, cette technique est présente après une étape d'essorage ou l'étape de flash
- Le séchage avec un fluide, de préférence chaud, qui permet d'enlever les résidus de solvant et de monomères non convertis dans le polymère. Souvent, cette technique est présente après une étape d'essorage ou l'étape de flash ;

Dans un mode de fonctionnement préférentiel, la récupération du polymère de la solution polymère se fait par :

1 Concentration dans une succession d'étapes de flash pour obtenir une solution polymère concentrée à au moins 15% en poids, préférentiellement à au moins 20% en poids et un flux gazeux de solvant et monomères non convertis exempts d'impuretés. Ce flux peut être recyclé à l'étape 2).

2 Stripping avec la vapeur d'eau pour obtenir le polymère avec un taux d'hydrocarbures (solvants et monomères non convertis) inférieur à 5% en poids, préférentiellement inférieur à 1% en poids. Le flux gazeux riche en solvant, en monomères non convertis et en vapeur d'eau est envoyé à l'étape 1) pour être purifié par décantation, distillation et/ou adsorption chimique. Le flux de polymère après cette étape est composé d'eau et de particules de polymère gorgés d'eau et de moins de 1% en poids d'hydrocarbures.

3 Filtration des particules de polymère puis essorage pour réduire le taux de matières volatiles (hydrocarbures et eau) à moins de 5% en poids, de préférence à moins de 3% en poids de matières volatiles.

4 Compression à plus de 50 bars, chauffage à moins de 250°C, extrusion et flash à pression atmosphérique pour baisser le taux de matières volatiles à moins de 1% en poids.

5 Séchage à l'air chaud et sec (~80°C) pour attendre la spécification en taux de matières volatiles, usuellement inférieur à 0.5 % en poids.

L'invention a aussi pour objet le copolymère obtenu par le procédé selon l'invention. Ce copolymère est avantageusement un élastomère. Ce copolymère est avantageusement un polymère semi-cristallin.

## Compositions

L'invention a également pour objet une composition comprenant un copolymère selon l'invention.

Dans une variante, le copolymère d'éthylène et de butadiène selon l'invention est un élastomère. Dans une autre variante, le copolymère d'éthylène et de butadiène selon l'invention est un polymère semi-cristallin de microstructure homogène.

La composition est avantageusement une composition de caoutchouc, en particulier une composition utilisable dans la fabrication d'un pneumatique.

Selon une variante avantageuse de l'invention, le copolymère selon l'invention est un élastomère Dans ce cas, le copolymère selon l'invention est particulièrement utile pour la préparation de compositions telles que décrites dans brevet WO 2014/082919 A1 ou WO 2014/114607 A1 au nom des Demanderesses. Si d'éventuels autres élastomères sont utilisés dans la composition, le copolymère selon l'invention constitue la fraction majoritaire en poids de l'ensemble des élastomères; il représente alors au moins 65%, de préférence au moins 70% en poids, plus préférentiellement au moins 75% en poids de l'ensemble des élastomères présents dans la composition élastomère. De manière préférentielle également, le copolymère selon l'invention représente au moins 95% (en particulier 100%) en poids de l'ensemble des élastomères présents dans la composition. Ainsi, la quantité de copolymère conforme à l'invention est comprise dans un domaine qui varie de 65 à 100 pce, (parties en poids pour cent parties d'élastomère total), préférentiellement de 70 à 100 pce et notamment de 75 à 100 pce. De manière préférentielle également, la composition contient de 95 à 100 pce de copolymère selon l'invention.

La composition selon l'invention, peut comporter en outre au moins un (c'est-à-dire un ou plusieurs) caoutchouc diénique à titre d'élastomère non thermoplastique.

Par élastomère ou caoutchouc « diénique », doit être compris de manière connue un (on entend un ou plusieurs) élastomère issu au moins en partie (i.e. ; un homopolymère ou un copolymère) de monomères diéniques (monomères porteurs de deux doubles liaisons carbone carbone, conjuguées ou non).

Par élastomère diénique, doit être compris selon l'invention tout élastomère synthétique issu au moins en partie de monomères diéniques. Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8

à 20 atomes de carbone. Dans le cas de copolymères, ceux-ci contiennent de 20 % à 99 % en poids d'unités diéniques, et de 1 à 80 % en poids d'unités vinylaromatiques . A titre de diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1 ,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4 hexadiène, etc
L'élastomère diénique de la composition conforme à l'invention est choisi préférentiellement dans le groupe des élastomères diéniques constitué par les polybutadiènes, les polyisoprènes de synthèse, le caoutchouc naturel, les copolymères de butadiène, les copolymères d'isoprène et les mélanges de ces élastomères. De tels copolymères sont plus préférentiellement choisis dans le groupe constitué par les copolymères du styrène (SBR, SIR et SBIR), les polybutadiènes (BR), les polyisoprènes de synthèse (IR) et le caoutchouc naturel (NR).

Charge renforçante

Lorsqu'une charge renforçante est utilisée, on peut utiliser tout type de charge habituellement utilisée pour la fabrication de pneumatiques, par exemple une charge organique telle que du noir de carbone, une charge inorganique capable de renforcer à elle seule, sans autre moyen qu'un agent de couplage intermédiaire, telle que de la silice, ou encore un coupage de ces deux types de charge, notamment un coupage de noir de carbone et de silice.
Pour coupler la charge inorganique renforçante à l'élastomère, on utilise de manière connue un agent de couplage (ou agent de liaison) au moins bifonctionnel destiné à assurer une connexion suffisante, de nature chimique et/ou physique, entre la charge inorganique (surface deses particules ou des agrégats de particules) et l'élastomère selon l'invention, en particulier des organosilanes ou des polyorganosiloxanes bifonctionnels.

Additifs divers

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti- fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters (par exemple les trioléates de glycérol), les résines hydrocarbonées présentant une haute Tg, de préférence supérieure à 30°C, telles que décrites par exemple dans les demandes WO 2005/087859, WO 2006/061064 et WO 2007/017060, et les mélanges de tels composés.
L'invention a aussi pour objet un pneumatique dont un des éléments constitutifs comprend une composition selon l'invention.
Les caractéristiques précitées de la présente invention, ainsi que d'autres, seront mieux comprises à la lecture de la description suivante de plusieurs exemples de réalisation de l'invention, donnés à titre illustratif et non limitatif en relation avec les annexes jointes.

**MESURES ET TESTS UTILISES**

DETERMINATION DES MASSES MOLAIRES : Analyse par Chromatographie d'Exclusion Stérique des copolymères :

a) Pour les copolymères solubles à température ambiante dans le tétrahydrofuranne (THF), on a déterminé les masses molaires par chromatographie d'exclusion stérique dans le THF. On a injecté les échantillons à l'aide d'un injecteur " Waters 717 " et d'une pompe " Waters 515 HPLC " à un débit de 1 $ml.min^{-1}$ dans une série de colonnes " Polymer Laboratories ".
Cette série de colonnes, placée dans une enceinte thermostatée à 45°C, est composée de :

- 1 précolonne PL Gel 5 $\mu$m,
- 2 colonnes PL Gel 5 $\mu$m Mixte C,
- 1 colonne PL Gel 5 $\mu$m-500 Å.

On a réalisé la détection à l'aide d'un réfractomètre " Waters 410 ".
On a déterminé les masses molaires par calibration universelle en utilisant des étalons de polystyrène certifiés par " Polymer Laboratories " et une double détection avec réfractomètre et couplage au viscosimètre.
Sans être une méthode absolue, la SEC permet d'appréhender la distribution des masses moléculaires d'un polymère. A partir de produits étalons commerciaux de type Polystyrène les différentes masses moyennes en nombre (Mn) et en poids (Mw) peuvent être déterminées et l'indice de polymolécularité calculé (Ip = Mw/Mn).
b) Pour les copolymères insolubles à température ambiante dans le tétrahydrofuranne, les masses molaires ont été déterminées dans le 1,2,4- trichlorobenzène. On les a tout d'abord dissous à chaud (4 h 00 à 150°C), puis on les a injectés à 150°C avec un débit de 1 $ml.min^{-1}$ dans un chromatographe " Waters Alliance GPCV 2000 " équipé de trois colonnes " Styragel " (2 colonnes " HT6E " et 1 colonne " HT2 ").

On a effectué la détection à l'aide d'un réfractomètre " Waters ".
On a déterminé les masses molaires par calibration relative en utilisant des étalons polystyrène certifiés par " Polymer Laboratories ".

DETERMINATION DES FRACTIONS MOLAIRES

On se reportera à l'article « Investigation of ethylene/butadiene copolymers microstructure by $^1$H and $^{13}$C NMR, Llauro M. F., Monnet C., Barbotin F., Monteil V., Spitz R., Boisson C., Macromolecules 2001,34, 6304-6311 », pour une description détaillée des techniques de RMN'H et de RMN$^{13}$C qui ont été précisément utilisées dans la présente demande pour déterminer les fractions molaires de ces unités trans-1,2 cyclohexane, ainsi que les unités éthylène, butadiène 1,4-cis et butadiène 1,4-*trans.*

DETERMINATION DE LA CRISTALLINITE

La mesure de cristallinité se fait par comparaison de l'enthalpie de fusion observé dans le cas des EBR. Ce phénomène endothermique est observé lors de l'analyse du thermogramme de la mesure DSC (Differential Scanning Calorimetry). La mesure se fait par balayage aller retour de -150°C à 200°C sous atmosphère inerte (hélium) avec une rampe de 20°C/min. Le signal correspondant au phénomène endothermique (fusion) est intégré et le taux de cristallinité est le rapport entre l'enthalpie mesurée et celle du polyéthylène parfaitement cristallin (290J/g)

%Cristallinité = (Enthalpie mesurée en J/g) / (enthalpie théorique d'un polyéthylène 100% cristallin en J/g)

DETERMINATION DE LA TEMPERATURE DE TRANSITION VITREUSE

La température de transition vitreuse, Tg, est mesurée dans la présente demande par la technique DSC (Differential Scanning Calorimetry) sur un appareil de dénomination « Setaram DSC 131 ». Le programme de température utilisé correspond à une montée en température de-120°C à 150°C à la vitesse de 10°C/min. On pourra se référer à la méthode décrite dans la demande WO 2007/054224 (page 11).

**EXEMPLES**

**Exemples -Copolymère selon l'invention obtenus par Simulation Numérique**

Les conditions de polymérisation de l'éthylène et butadiène selon l'invention impliquent que la concentration de chacun des deux monomères dans le milieu réactionnel reste constante. Pour toute réaction d'ordre supérieur ou égale à 1 par rapport aux monomères, l'homme du métier déduit, de manière trivial, que les vitesses d'insertion de chaque unité dans la chaîne restent également constantes pendant toute la durée de la polymérisation.
Dans le cas particulier des systèmes catalytiques décrits par l'invention, la prédiction de la microstructure est calculée par les équations suivantes :

$$\%motifs_E = \frac{R1 + R3}{R1 + R2 + R3 + R4}$$

$$\%motifs_B = 1 - \%motifs_E$$

Où:

- $\%motifs_E$ est le pourcentage molaire des motifs éthyléniques dans la chaîne
- $\%motifs_B$ est le pourcentage molaire des motifs butadiéniques (1,4 et 1,2) dans la chaîne
- Et R1 à R4 calculé comme ci-dessous

$R1 = k_{P1}\%PE[E]$
$R2 = k_{P2}\%PE[B]$
$R3 = k_{P3}\%PB[E]$
$R4 = k_{P4}\%PB[B]$
Où :

- $k_1$ à $k_4$ ce sont des constantes
- [E], [B] sont les concentrations d'éthylène, butadiène en mol/L
- %PE, %PB, calculés selon le système d'équations ci-dessous :

$$\%P_E = 1 - \%P_B$$

$$\%P_B = \frac{\frac{k_{P2}}{k_{P1}}\%Bd_{Liq}}{\frac{k_{P3}}{k_{P1}}\%Et_{Liq} + \frac{k_{P2}}{k_{P1}}\%Bd_{Liq}}$$

Où :

- $\%Et_{liq}$=[E]/([E]+[B])
- $\%Bd_{liq}$=[B]/([E]+[B])

Les valeurs de k2, k3, k4 et k5 sont mesurées expérimentalement et puis rapportées à k1.

Ce modèle mathématique permet de prévoir la répartition des unités éthylène et butadiène d'un élastomère produit selon l'invention et en fonction des constantes k1 à k4 et de la composition molaire d'éthylène et de butadiène dans la phase liquide.

**Exemple pour le système catalytique constitué du métallocène [$Me_2$Si(Cp)(Flu)Nd($BH_4$)(THF)] en présence de butyl-octyl-magnesium**

Pour ce système catalytique, selon les méthodes connues de l'homme du métier, des essais de copolymérisation de l'éthylène et du butadiène ont été réalisés en maintenant une composition constante en monomères dans le milieu réactionnel. Nous avons pu déterminer les valeurs suivantes du modèle sur la base d'essais expérimentaux, inspirés de ceux décrits dans l'article Angewandte Chemie, Int Ed, 2005, Volume 44, Issue 17, pages 2593-2596 mais en maîtrisant le débit d'injection des monomères conformément à l'invention.

| | |
|---|---|
| k1/k1 | 1.00 |
| k2/k1 | 12.66 |
| k3/k1 | 13.00 |
| k4/k1 | 1.39 |

En utilisant le modèle mathématique décrit ci-dessus et les constantes du tableau ci-dessus, nous avons estimé les microstructures accessibles pour ce système chimique. Le tableau ci-dessous présente un échantillon des résultats de simulation pour ce cas particulier.

| $\%Et_{liq}$ | %motifs E | %motifs B | $\%Et_{liq}$ | %motifs E | %motifs B |
|---|---|---|---|---|---|
| 1% | 8% | 92% | 60% | 51% | 49% |
| 2% | 14% | 86% | 70% | 53% | 47% |
| 5% | 25% | 75% | 75% | 54% | 46% |
| 10% | 34% | 66% | 80% | 56% | 44% |
| 15% | 39% | 61% | 85% | 59% | 41% |
| 20% | 42% | 58% | 90% | 63% | 37% |
| 25% | 44% | 56% | 95% | 71% | 29% |
| 30% | 45% | 55% | 98% | 83% | 17% |
| 40% | 48% | 52% | 99% | 90% | 10% |
| 50% | 49% | 51% | | | |

## Revendications

1. Copolymère d'éthylène et de butadiène comprenant, répartis statistiquement, des unités éthylène et des unités butadiène, la fraction molaire d'unités éthylène dans ledit copolymère étant égale ou supérieure à 50%, par rapport au nombre de moles total d'unités éthylène et butadiène, **caractérisé en ce que** la concentration molaire en chacune des unités est constante tout le long de la chaîne du copolymère.

2. Copolymère d'éthylène et de butadiène selon la revendication 1, **caractérisé en ce que** la fraction molaire d'unités éthylène varie de 50% en moles à 95% en moles, par rapport au nombre de moles total d'unités éthylène et butadiène.

3. Copolymère d'éthylène et de butadiène selon la revendication 1, **caractérisé en ce que** la fraction molaire d'unités éthylène varie de 70% en moles à 88% en moles, par rapport au nombre de moles total d'unités éthylène et butadiène.

4. Procédé semi-continu de préparation d'un copolymère d'éthylène et de butadiène selon l'une quelconque des revendications précédentes, comprenant la polymérisation en solution, dans un solvant hydrocarboné, à une température comprise entre 0°C et 200°C, d'éthylène et de butadiène en présence d'un système catalytique, dans un réacteur agité, **caractérisé en ce que** la polymérisation est conduite à température constante et à pression éthylène et pression butadiène constantes, **en ce que** de l'éthylène et du butadiène sont injectés de manière continue dans le réacteur et ce que dans le milieu réactionnel, à chaque instant de la polymérisation, les concentrations en éthylène et en butadiène sont constantes.

5. Procédé selon la revendication 4, **caractérisé en ce que** la composition du milieu réactionnel est analysée en continu et le débit d'injection en éthylène et butadiène est ajusté pour maintenir dans le milieu réactionnel des concentrations en éthylène et en butadiène constantes.

6. Procédé selon la revendication 4, **caractérisé en ce que** le débit d'injection en éthylène et butadiène est ajusté pour maintenir une pression éthylène et une pression butadiène constantes dans le réacteur.

7. Procédé selon la revendication 6, **caractérisé en ce que** l'éthylène et le butadiène sont injectés selon un rapport de débit pré-déterminé.

8. Procédé selon la revendication 7, **caractérisé en ce qu'**on injecte une composition comprenant l'éthylène et le butadiène à concentrations en éthylène et en butadiène constantes.

9. Procédé selon l'une quelconque des revendications 4 à 8, **caractérisé en ce que** le système catalytique comprend au moins deux constituants, d'une part un métallocène répondant à la formule (I) :

$$[P(Cp^1)(Cp^2)Met] \qquad (I)$$

- avec :

Met étant un groupe comportant :

◦ au moins un atome de scandium, yttrium ou un atome de lanthanide, dont le numéro atomique va de 57 à 71,
◦ au moins un ligand monovalent, appartenant au groupe des halogènes, tel que le chlore, l'iode, le brome, le fluor, au groupe des amidures, des alkyles ou des borohydrures
◦ éventuellement d'autres constituants tels que des, molécules complexantes, appartenant au groupe des éthers ou des aminés,

P étant un groupe, à base d'au moins un atome de silicium ou de carbone, pontant les deux groupes $Cp^1$ et $Cp^2$
$Cp^1$ et $Cp^2$, sont identiques entre eux ou différents l'un de l'autre, et étant choisis dans le groupe constitués par les groupes cyclopentadiényles, indényles, fluorényles, ces groupes pouvant être substitués ou non
Chacun des $Cp^1$ et $Cp^2$ étant lié à un atome de scandium, yttrium ou lanthanide,
Le cas où les $Cp^1$ et $Cp^2$ sont tous deux des fluorényles identiques est exclu de l'invention
d'autre part d'un ou plusieurs composés organométalliques à titre de co-catalyseur ou d'agent d'alkylation.

**10.** Copolymère d'éthylène et de butadiène selon l'une quelconque des revendications 1 à 3 qui est un élastomère.

**11.** Copolymère d'éthylène et de butadiène selon l'une quelconque des revendications 1 à 3 qui est un polymère semi-cristallin.

**12.** Composition comprenant un copolymère selon l'une quelconque des revendications 1 à 3 ou 10 ou 11.

**13.** Pneumatique dont un des éléments constitutifs comprend une composition selon la revendication 12.

**Patentansprüche**

**1.** Copolymer von Ethylen und Butadien, umfassend Ethylen-Einheiten und Butadien-Einheiten in statistischer Verteilung, wobei der molare Anteil von Ethylen-Einheiten in dem Copolymer gleich oder größer als 50 %, bezogen auf die Gesamtzahl der Mole von Ethylen-Einheiten und Butadien-Einheiten, ist, **dadurch gekennzeichnet, dass** die molare Konzentration jeder der Einheiten entlang der Kette des Copolymers konstant ist.

**2.** Copolymer von Ethylen und Butadien nach Anspruch 1, **dadurch gekennzeichnet, dass** der molare Anteil von Ethylen-Einheiten im Bereich von 50 Mol-% bis 95 Mol-%, bezogen auf die Gesamtzahl der Mole von Ethylen-Einheiten und Butadien-Einheiten, liegt.

**3.** Copolymer von Ethylen und Butadien nach Anspruch 1, **dadurch gekennzeichnet, dass** der molare Anteil von Ethylen-Einheiten im Bereich von 70 Mol-% bis 88 Mol-%, bezogen auf die Gesamtzahl der Mole von Ethylen-Einheiten und Butadien-Einheiten, liegt.

**4.** Halbkontinuierliches Verfahren zur Herstellung eines Copolymers von Ethylen und Butadien nach einem der vorhergehenden Ansprüche, umfassend die Lösungspolymerisation von Ethylen und Butadien in einem Kohlenwasserstoff-Lösungsmittel bei einer Temperatur zwischen 0 °C und 200 °C in Gegenwart eines katalytischen Systems in einem Rührreaktor, **dadurch gekennzeichnet, dass** die Polymerisation bei konstanter Temperatur und bei konstantem Ethylen-Druck und konstantem Butadien-Druck durchgeführt wird, dass das Ethylen und das Butadien kontinuierlich in den Reaktor eingeleitet werden und dass in dem Reaktionsmedium die Ethylen-Konzentration und die Butadien-Konzentration zu jedem Zeitpunkt der Polymerisation konstant sind.

**5.** Verfahren nach Anspruch 4, **dadurch gekennzeichnet, dass** die Zusammensetzung des Reaktionsmediums kontinuierlich analysiert wird und die Einleitungsströmungsraten von Ethylen und Butadien so eingestellt werden, dass im Reaktionsmedium eine konstante Ethylen-Konzentration und eine konstante Butadien-Konzentration aufrechterhalten werden.

**6.** Verfahren nach Anspruch 4, **dadurch gekennzeichnet, dass** die Einleitungsströmungsraten von Ethylen und Butadien so eingestellt werden, dass im Reaktor ein konstanter Ethylen-Druck und ein konstanter Butadien-Druck aufrechterhalten werden.

**7.** Verfahren nach Anspruch 6, **dadurch gekennzeichnet, dass** das Ethylen und das Butadien gemäß einem vorbestimmten Strömungsratenverhältnis eingeleitet werden.

8. Verfahren nach Anspruch 7, **dadurch gekennzeichnet, dass** man eine Zusammensetzung einleitet, die das Ethylen und das Butadien in konstanten Konzentrationen von Ethylen und Butadien umfasst.

9. Verfahren nach einem der Ansprüche 4 bis 8, **dadurch gekennzeichnet, dass** das katalytische System mindestens zwei Bestandteile umfasst, einerseits ein Metallocen, das der Formel (I) entspricht:

$$[P(Cp^1)(Cp^2)Met] \qquad (I)$$

- wobei:

Met für eine Gruppe steht, die

o mindestens ein Scandium- oder Yttriumatom oder ein Lanthanidatom mit einer Ordnungszahl von 57 bis 71,
o mindestens einen einwertigen Liganden, der zur Gruppe der Halogene, wie Chlor, Iod, Brom oder Fluor, oder zur Gruppe der Amide, Alkyle oder Borhydride gehört,
o gegebenenfalls weitere Bestandteile, wie komplexierende Moleküle, die zur Gruppe der Ether oder der Amine gehören,

umfasst,
P für eine Gruppe auf Basis mindestens eines Silicium- oder Kohlenstoffatoms steht, die die beiden Gruppen $Cp^1$ und $Cp^2$ verbrückt,
$Cp^1$ und $Cp^2$ gleich oder voneinander verschieden sind und aus der Gruppe bestehend aus cyclopentadienyl-, Indenyl- und Fluorenylgruppen ausgewählt sind, wobei diese Gruppen substituiert oder unsubstituiert sein können,
wobei jedes von $Cp^1$ und $Cp^2$ an ein Scandium-, Yttrium- oder Lanthanid Atom gebunden ist,
wobei der Fall, dass $Cp^1$ und $Cp^2$ beide für gleiche Fluorenylgruppen stehen, aus der Erfindung ausgeschlossen ist,
andererseits eine oder mehrere metallorganische Verbindungen als Cokatalysator oder Alkylierungsmittel.

10. Copolymer von Ethylen und Butadien nach einem der Ansprüche 1 bis 3, bei dem es sich um ein Elastomer handelt.

11. Copolymer von Ethylen und Butadien nach einem der Ansprüche 1 bis 3, bei dem es sich um ein teilkristallines Polymer handelt.

12. Zusammensetzung, umfassend ein Copolymer nach einem der Ansprüche 1 bis 3 oder 10 oder 11.

13. Reifen, wobei eines seiner Aufbauelemente eine Zusammensetzung nach Anspruch 12 umfasst.

## Claims

1. Ethylene/butadiene copolymer comprising, statistically distributed, ethylene units and butadiene units, the molar fraction of ethylene units in said copolymer being greater than or equal to 50%, relative to the total number of moles of ethylene and butadiene units, **characterized in that** the molar concentration of each of the units is constant all along the chain of the copolymer.

2. Ethylene/butadiene copolymer according to Claim 1, **characterized in that** the molar fraction of ethylene units ranges from 50 mol% to 95 mol%, relative to the total number of moles of ethylene and butadiene units.

3. Ethylene/butadiene copolymer according to Claim 1, **characterized in that** the molar fraction of ethylene units ranges from 70 mol% to 88 mol%, relative to the total number of moles of ethylene and butadiene units.

4. Semi-continuous process for preparing an ethylene/butadiene copolymer according to any one of the preceding claims, comprising the solution polymerization, in a hydrocarbon-based solvent, at a temperature of between 0°C and 200°C, of ethylene and butadiene in the presence of a catalytic system, in a stirred reactor, **characterized in**

**that** the polymerization is carried out at constant temperature and at constant ethylene pressure and constant butadiene pressure, **in that** the ethylene and butadiene are injected continuously into the reactor and **in that**, in the reaction medium, at each instant of polymerization, the ethylene and butadiene concentrations are constant.

**5.** Process according to Claim 4, **characterized in that** the composition of the reaction medium is continuously analysed and the ethylene and butadiene injection flow rate is adjusted so as to maintain, in the reaction medium, constant ethylene and butadiene concentrations.

**6.** Process according to Claim 4, **characterized in that** the ethylene and butadiene injection flow rate is adjusted so as to maintain a constant ethylene pressure and a constant butadiene pressure in the reactor.

**7.** Process according to Claim 6, **characterized in that** the ethylene and the butadiene are injected according to a predetermined flow ratio.

**8.** Process according to Claim 7, **characterized in that** a composition comprising the ethylene and the butadiene at constant ethylene and butadiene concentrations is injected.

**9.** Process according to any one of Claims 4 to 8, **characterized in that** the catalytic system comprises at least two constituents, on the one hand a metallocene corresponding to formula (I):

$$[P(Cp^1)(Cp^2)Met] \qquad (I)$$

- with:

Met being a group comprising:

o at least one scandium or yttrium atom or one atom of lanthanide, the atomic number of which ranges from 57 to 71,
o at least one monovalent ligand, belonging to the halogen group, such as chlorine, iodine, bromine or fluorine, or to the amide, alkyl or borohydride group,
o optionally other constituents, such as complexing molecules, belonging to the ether or amine group,

P being a group, based on at least one silicon or carbon atom, bridging the two groups $Cp^1$ and $Cp^2$
$Cp^1$ and $Cp^2$ are identical to or different from one another, and are selected from the group consisting of cyclopentadienyl, indenyl and fluorenyl groups, these groups optionally being substituted or unsubstituted.
Each of $Cp^1$ and $Cp^2$ is bonded to a scandium, yttrium or lanthanide atom.
The case where $Cp^1$ and $Cp^2$ are both identical fluorenyls is excluded from the invention,
on the other hand, one or more organometallic compounds as co-catalyst or alkylating agent.

**10.** Ethylene/butadiene copolymer according to any one of Claims 1 to 3, which is an elastomer.

**11.** Ethylene/butadiene copolymer according to any one of Claims 1 to 3, which is a semicrystalline polymer.

**12.** Composition comprising a copolymer according to any one of Claims 1 to 3 or 10 to 11.

**13.** Tyre, one of the constituent elements of which comprises a composition according to Claim 12.

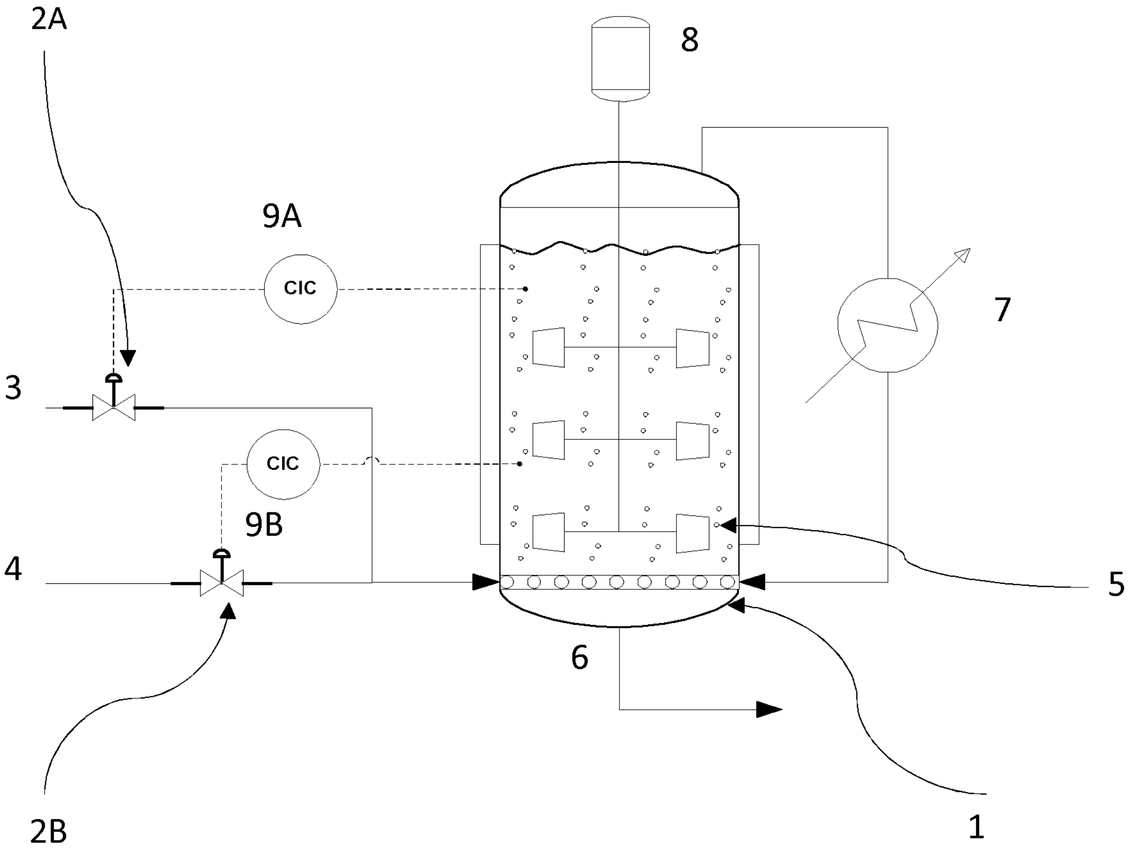


FIG. 1

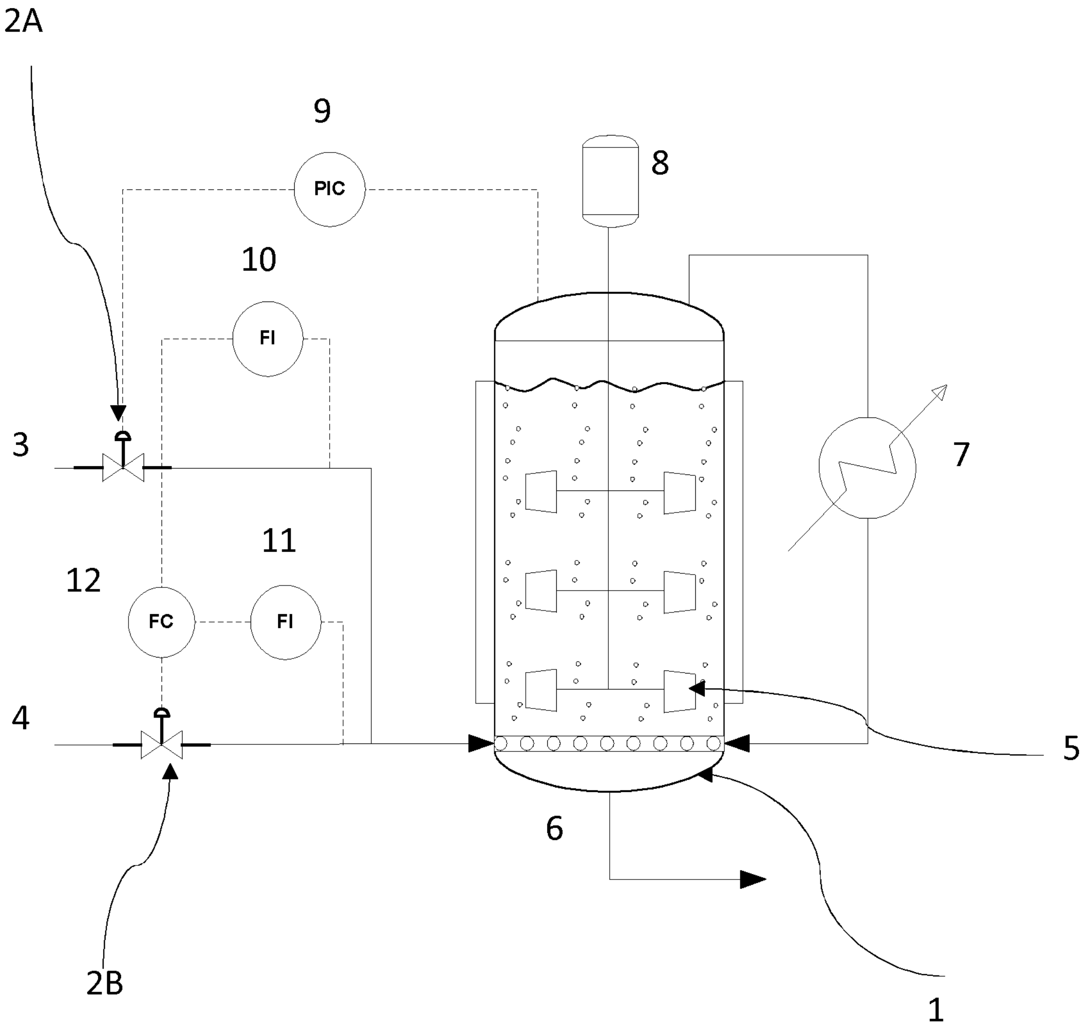


FIG. 2

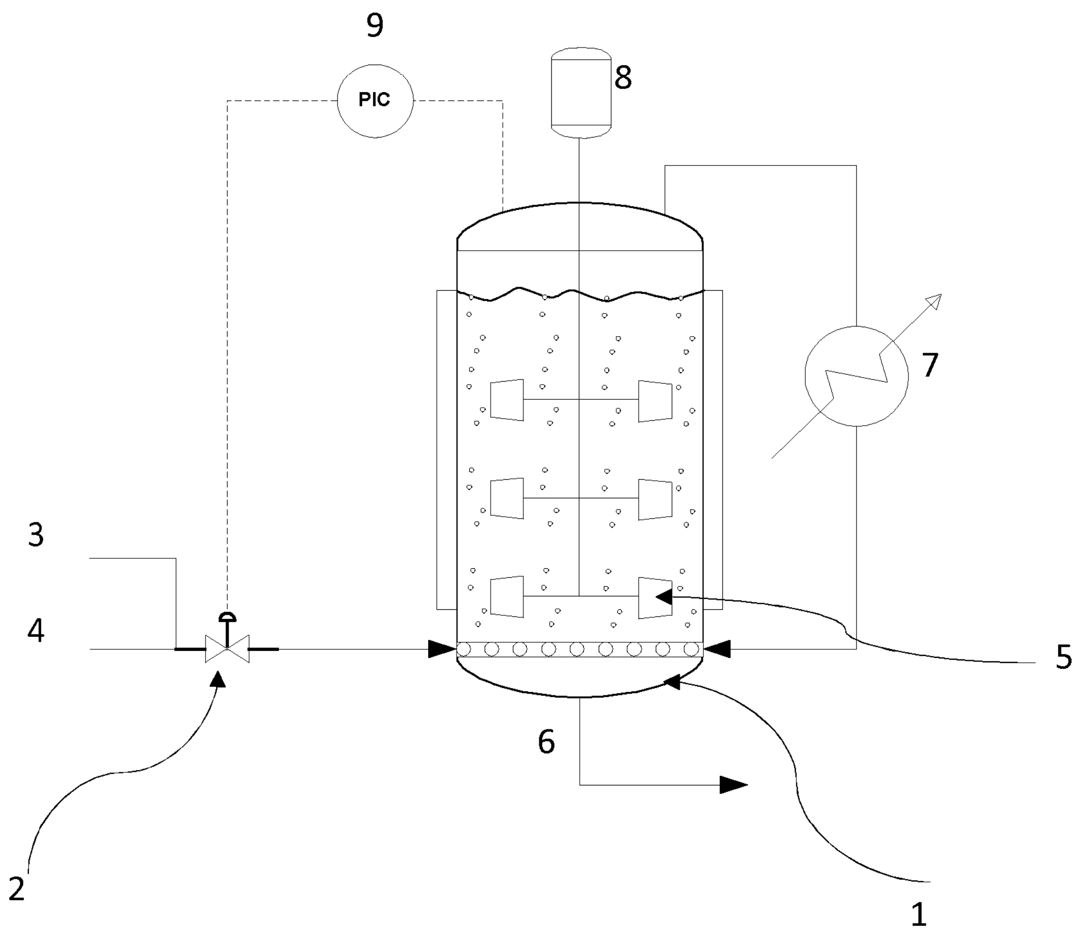


FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014082919 A1
- WO 2014114607 A1
- EP 1092731 A1
- US 20050239639 A1
- EP 0526955 A
- WO 2005028526 A1
- US 2009270578 A1
- WO 0210269 A
- WO 2005087859 A
- WO 2006061064 A
- WO 2007017060 A
- WO 2007054224 A


### Littérature non-brevet citée dans la description


- ansa-Bis(fluorenyl)neodymium Catalysts for Cyclopolymerization of Ethylne with Butadiene. **THUILLIEZ J et al.** MACROMOLECULES. ACS, vol. 42
- **LLAURO M. F. ; MONNET C. ; BARBOTIN F. ; MONTEIL V. ; SPITZ R. ; BOISSON C.** *Macromolecules,* 2001, vol. 34, 6304-6311
- *Angewandte Chemie, Int Ed,* 2005, vol. 44 (17), 2593-2596